# FASCICULE DE BREVET EUROPEEN

(11) **EP 2 572 981 B1**
(45) Date de publication et mention de la délivrance du brevet: **22.02.2017**
(21) Numéro de dépôt: 12185282.6
(22) Date de dépôt: 20.09.2012
(51) Int. Cl.: B64C 25/30, B64C 25/16

(54) **Dispositif de manoeuvre au sol d'une trappe d'un atterrisseur d'aéronef**
Vorrichtung zur Betätigung einer Fahrwerkschachtklappe eines Flugzeuges am Boden
Device for operating on the ground an aircraft landing gear door

(30) Priorité: 26.09.2011 FR 1158583
(43) Date de publication de la demande: 27.03.2013
(73) Titulaire: Safran Landing Systems, 78140 Vélizy-Villacoublay (FR)
(72) Inventeur: Lecourtier, Gilbert, 78140 Velizy-Villacoublay (FR); Liegois, Pierre-Yves, 78140 Velizy-Villacoublay (FR)
(74) Mandataire: Parzy, Benjamin Alain

(56) Documents cités:
- US-A- 2 538 878
- US-A- 4 573 649
- US-B1- 6 854 689

## Description

L'invention concerne un dispositif de manoeuvre au sol d'une trappe d'un atterrisseur d'aéronef.

### ARRIERE-PLAN DE L'INVENTION

La plupart des aéronefs modernes sont munis d'atterrisseurs escamotables, de soutes destinées à recevoir ces atterrisseurs lorsque l'aéronef est en vol, et de trappes pour fermer ces soutes. L'ouverture et la fermeture des trappes sont effectuées à l'aide d'actionneurs de manoeuvre des trappes, par exemple des vérins.

Lorsque la trappe arrive en position fermée, elle est verrouillée automatiquement dans cette position par des moyens d'accrochage, par exemple un boîtier d'accrochage sur lequel s'articule un crochet qui emprisonne un galet fixé sur la trappe. Le décrochetage du crochet est réalisé à l'aide d'un actionneur, le plus souvent hydromécanique ou électromécanique. Souvent, le boîtier d'accrochage comporte un actionneur de secours à même de déverrouiller le crochet, si l'actionneur principal ne pouvait plus être utilisé.

En vol, le décrochetage de ce crochet et l'ouverture et la fermeture de cette trappe sont commandés lors des séquences d'extension et de rétraction des atterrisseurs. Il est à noter que les trappes sont refermées et crochetées lorsque les atterrisseurs sont déployés.

Lorsque l'aéronef est au sol, il est nécessaire de pouvoir ouvrir les trappes, notamment pour accéder aux équipements situés sur la partie haute de l'atterrisseur ou dans la soute de l'atterrisseur. Dans ce but, la plupart des aéronefs comportent des moyens de commande opérables par le personnel au sol, permettant de désactiver les moyens d'accrochage afin de libérer les trappes.

Comme l'énergie nécessaire à ces opérations, généralement hydraulique ou électrique, n'est pas disponible au sol, notamment lorsque les moteurs sont arrêtés, l'aéronef comporte des moyens de commande mécaniques agencés pour désactiver les moyens d'accrochage lorsque l'aéronef est au sol. Ces moyens de commande mécaniques comportent en général une poignée reliée aux boîtiers d'accrochage par un embiellage.

Ces moyens de commande mécaniques sont particulièrement lourds, encombrants et donc coûteux pour le fabriquant de l'aéronef.

Un dispositif de manoeuvre au sol d'une trappe d'un atterrisseur est connu de US4573649, qui montre les caractéristiques techniques du prambule de la revendication 1.

### OBJET DE L'INVENTION

L'invention a pour objet un dispositif de manoeuvre au sol d'une trappe d'un atterrisseur, permettant de réduire le poids des dispositifs existants sans diminuer la sûreté de cette manoeuvre.

### BREVE DESCRIPTION DE L'INVENTION

La présente invention propose un dispositif de manoeuvre au sol d'une trappe d'un atterrisseur avec tel que définie par les caractéristiques techniques de la revendication 1.

En vue de la réalisation de ce but, on propose un dispositif de manoeuvre au sol d'une trappe d'un atterrisseur d'aéronef, la trappe étant associée à des moyens de manoeuvre de la trappe et des moyens d'accrochage permettant de bloquer la trappe lorsque celle-ci arrive en position fermée, les moyens d'accrochage comportant au moins un actionneur électromécanique de déverrouillage agencé pour agir sur les moyens d'accrochage en vue de les désactiver lors d'une ouverture de la trappe en vol. Selon l'invention, le dispositif comporte des moyens de commande opérables par un opérateur au sol pour commander au moins :
- une séquence d'ouverture lors de laquelle l'actionneur électromécanique de déverrouillage est actionné pour désactiver les moyens d'accrochage,
- une séquence de fermeture lors de laquelle les moyens de manoeuvre sont actionnés pour refermer la trappe.

La désactivation au sol des moyens d'accrochage par la commande d'un actionneur électromécanique équipant déjà le boîtier d'accrochage permet de remplacer des éléments mécaniques des moyens de commande mécaniques par des éléments électriques, ce qui contribue à un gain de poids important.

Selon l'invention, le dispositif d'ouverture comporte au moins deux organes de commande agencés de sorte qu'ils doivent être tous deux actionnés pour autoriser la commande de l'actionneur de déverrouillage ou la commande des moyens de manoeuvre.

Ainsi, une manoeuvre de la trappe ne peut être commandée par inadvertance par l'action d'un opérateur au sol ou toute autre cause extérieure.

### BREVE DESCRIPTION DES DESSINS

L'invention sera mieux comprise à la lumière de la description qui suit en référence aux figures des dessins annexés parmi lesquelles :
- la figure 1 est une vue schématique de face d'une soute d'aéronef avec sa trappe et son atterrisseur en position déployée,
- la figure 2 illustre schématiquement un boîtier d'accrochage muni de deux actionneurs, dont un actionneur électromécanique,
- la figure 3 est un schéma de principe illustrant les interactions entre différents éléments du dispositif de manoeuvre selon un mode particulier de réalisation de l'invention,
- la figure 4 illustre les moyens de commande du dispositif de manoeuvre de la figure 3.

### DESCRIPTION DETAILLEE DE L'INVENTION

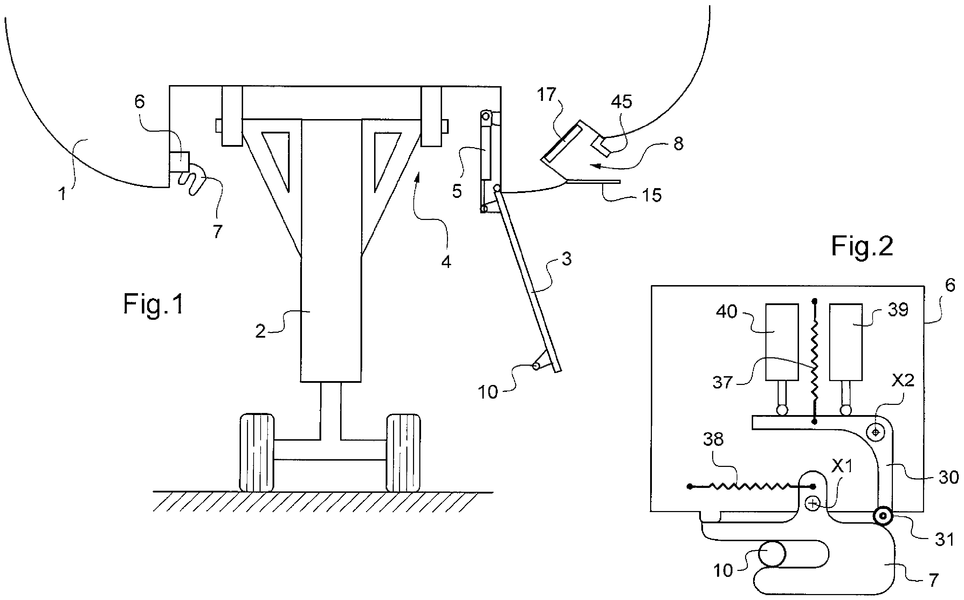

L'aéronef 1 représenté à la figure 1 comporte un atterrisseur 2 articulé sur la structure entre une position déployée illustrée ici et une position rétractée dans laquelle l'atterrisseur est reçu dans une soute 4 refermable par une trappe 3. Un vérin 5 attelé à la trappe 3 permet de manoeuvrer celle-ci. Un boîtier d'accrochage 6 muni d'un crochet 7 permet de crocheter une olive 10 solidaire de la trappe 3 lorsque la trappe 3 arrive en position fermée. Pour commander la manoeuvre de la trappe 3 et le décrochetage du crochet 7, l'aéronef est muni de moyens de commande 17 accessibles par l'ouverture d'une porte 15.

La figure 2 illustre un boîtier d'accrochage 6, connu en soi, le crochet 7 étant représenté en position de verrouillage, emprisonnant l'olive 10 de la trappe 3. Le crochet 7 est monté pivotant autour d'un axe X1 et est maintenu en position de crochetage par un verrou 30 également pivoté selon un axe X2 parallèle à l'axe X1 et comportant un galet 31 coopérant avec une surface du crochet 7 pour maintenir celui-ci en position de crochetage. Des ressorts 37 et 38 rappellent respectivement le verrou 30 en position de verrouillage et le crochet 7 en position décrochetée. Le décrochetage du crochet 7 est commandé en vol par un actionneur principal 39 ou par un actionneur de secours 40, les deux actionneurs agissant sur le verrou 30 pour le faire pivoter de sorte que le verrou 30 libère le crochet 7. Ici, l'actionneur de secours 40 est du type électromécanique.

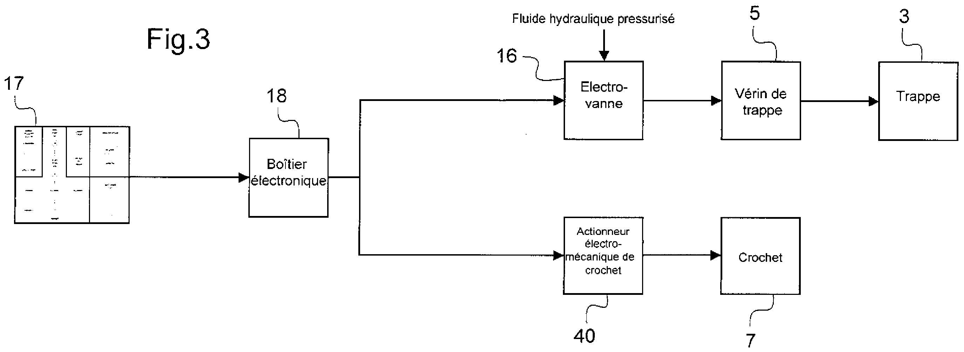

Le schéma représenté à la figure 3 illustre le principe de fonctionnement d'un dispositif d'ouverture au sol d'une trappe selon un premier mode particulier de réalisation de l'invention. Le dispositif comporte un tableau de commande 17 accessible au sol par un opérateur après ouverture d'une porte d'accès au tableau de commande. Le tableau de commande 17 comporte un certain nombre d'organes de commande (qui seront détaillés plus loin) pour envoyer des commandes à un boîtier de commande 18 qui est agencé pour commander une électrovanne 16 électrohydraulique reliée au vérin de trappe 5 et pour commander l'actionneur électromécanique de secours 40 du boîtier d'accrochage. Ainsi il est possible de commander au moins deux séquences :
- une séquence d'ouverture lors de laquelle l'actionneur électromécanique de secours 40 est actionné pour libérer l'olive de la trappe. L'électrovanne 16 est alors activée de sorte que les deux chambres du vérin de trappe 5 soient raccordées, l'effort résultant ouvrant la trappe 3 à la suite de la libération de la trappe 3,
- une séquence de fermeture lors de laquelle l'électrovanne 16 est actionnée de sorte que le vérin de trappe 5 referme la trappe. Celle-ci est alors automatiquement crochetée lorsque la trappe arrive en position fermée.

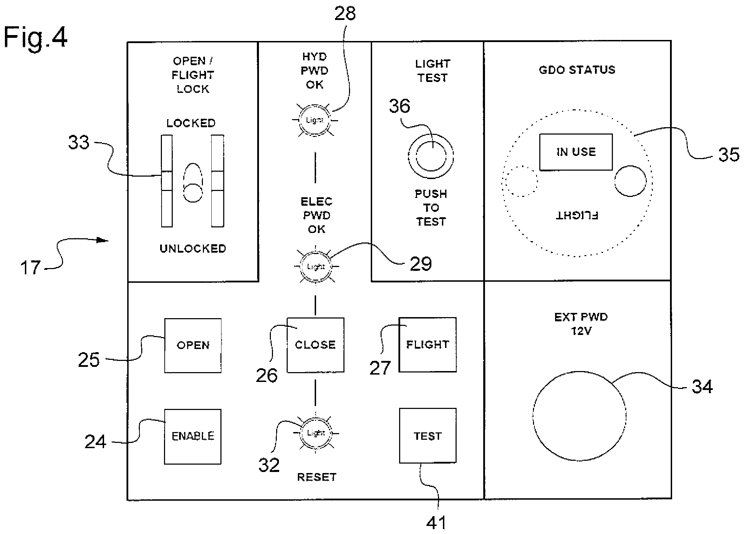

Le tableau de commande 17 est illustré plus en détail à la figure 4. Il comporte :
- quatre boutons poussoirs, 24, 25, 26, 27, nommés respectivement « ENABLE », « OPEN », « CLOSE », « FLIGHT »,
- des indicateurs lumineux 28, 29, 32, nommés respectivement « HYD PWD OK », « ELEC PWD OK », « RESET »,
- un interrupteur 33 permettant d'activer ou de désactiver les boutons poussoirs,
- une entrée électrique 34 permettant de connecter une source d'énergie extérieure,
- un bouton de test 36 permettant par une action de pression de vérifier que le tableau de commande 17 fonctionne correctement,
- un indicateur d'état 35.

Dans le dispositif d'ouverture de trappe de la présente invention, le tableau de commande 17 est situé dans l'espace 8 fermé par la porte d'accès 15. La commande d'ouverture de la trappe nécessite d'exercer une pression sur le bouton poussoir « ENABLE » 24 puis sur le bouton poussoir « OPEN » 25, ce qui provoque la transmission d'un ordre électrique au boîtier de commande 18, qui met alors en oeuvre la séquence d'ouverture.

La commande de fermeture de la trappe quant à elle nécessite d'exercer une pression sur le bouton poussoir « ENABLE » 24 puis sur le bouton poussoir « CLOSE » 26, ce qui provoque la transmission d'un ordre électrique au boîtier électronique 18 qui met alors en oeuvre la séquence de fermeture.

Une troisième séquence appelée ici séquence d'isolation est implémentée dans le dispositif de manoeuvre de trappe ; elle est commandée par une pression sur le bouton poussoir « ENABLE » 24 puis sur le bouton poussoir « FLIGHT » 27, et provoque l'isolation électrique entre le tableau de commande 17 et le reste du circuit électrique de l'aéronef, ce qui permet de garantir qu'aucune manoeuvre de la trappe 3 ne sera déclenchée intempestivement.

Le boîtier de commande 18 peut être un boîtier dédié à la commande du dispositif de manoeuvre des trappes au sol de l'invention, ou au contraire, être utilisé simultanément par un autre dispositif, par exemple un dispositif de manoeuvre de trappe et/ou d'atterrisseur en vol. Ainsi, les fonctions réalisées par le boîtier de commande associé au dispositif de manoeuvre de trappe au sol de la présente invention sont réalisées sans ajout d'équipement.

La pression sur le bouton poussoir « ENABLE » 24 permet aussi d'activer des indicateurs lumineux « HYD PWD OK », « ELEC PWD OK », qui permettent à l'opérateur de vérifier respectivement la disponibilité de l'énergie hydraulique et électrique nécessaires à un bon fonctionnement du dispositif.

Selon un aspect avantageux de l'invention, la consommation électrique du dispositif est nulle sauf lors du déroulement des séquences commandées : ainsi, la trappe 3 peut être maintenue en position ouverte lorsque l'aéronef est au sol sans que le dispositif ne consomme d'énergie.

Le tableau de commande 17 comporte une entrée électrique 34 permettant de connecter une source d'énergie extérieure aux moyens de commande, par exemple une batterie externe. L'alimentation par une source d'énergie extérieure est utilisée notamment lorsque des moyens d'alimentation électrique provenant de l'aéronef ne sont pas disponibles. Les moyens de commande comportent aussi un indicateur d'état « GDO STATUS » 35 qui indique :
- soit que le dispositif est en cours d'utilisation si la trappe est ouverte ou en cours d'ouverture ou de fermeture ou si les moyens de commande ne sont pas isolés électriquement (message « IN USE »)
- soit que le dispositif est dans un état correspondant à une configuration compatible avec le décollage pour les moyens de commande, c'est-à-dire à l'issue de la séquence dite d'isolation (message « FLIGHT »).

De préférence, l'indicateur « GDO STATUS » 35 est un indicateur à deux états stables, ne consommant de l'énergie que lors de la transition d'un état à l'autre.

Selon un aspect particulier de l'invention, l'indicateur « GDO STATUS » 35 est associé à un témoin 45 (visible à la figure 1) qui est déplaçable entre une position escamotée dans laquelle il permet la fermeture de la porte 15 d'accès au tableau de commande 17 et qui correspond à la position « FLIGHT » de l'indicateur « GDO STATUS » 35, et une position en saillie (représentée ici) dans laquelle il empêche la fermeture de la porte 15 d'accès au tableau de commande 17, correspondant à la position « IN USE » de l'indicateur « GDO STATUS » 35. Ainsi, le pilote peut vérifier lors de la visite pré-vol dans quel état se trouve le dispositif de l'invention, et être averti par la porte 15 restée ouverte que le dispositif de l'invention n'a pas été remis dans le statut « FLIGHT ».

Selon un autre aspect particulier de l'invention, le tableau de commande 17 comporte un second bouton de test 41, permettant par une action de pression de vérifier qu'un équipement annexe fonctionne correctement. Il est notamment particulièrement avantageux de pouvoir vérifier au sol le bon fonctionnement d'un actionneur électromécanique de secours de boîtier d'accrochage d'atterrisseur réalisant le décrochetage d'un crochet utilisé pour verrouiller l' atterrisseur en position escamotée, car les aéronefs ne comportent généralement pas de moyens pour tester cet actionneur électromécanique de secours en vol. Ainsi, une pression sur le bouton de test 41 permet d'actionner l'actionneur électromécanique de secours de boîtier d'accrochage d'atterrisseur, le décrochetage du crochet pouvant être vérifié visuellement depuis le sol par un opérateur qui aura préalablement amené manuellement le crochet en position crochetée.

L'invention n'est pas limitée au mode de réalisation particulier qui vient d'être décrit, mais, bien au contraire, couvre toute variante entrant dans le cadre de l'invention tel que défini par les revendications.

Bien que l'on ait décrit des moyens de commande qui nécessitent d'appliquer une pression successive sur deux boutons poussoirs différents, on peut bien sûr appliquer à ce dispositif tout type d'action de commande sur tout type d'organe de commande dans tout type de séquence de commande qui comporte au moins deux actions distinctes, ce afin d'éviter qu'un actionnement intempestif de l'un des organes de commande ne provoque une ouverture ou une fermeture non désirée de la ou des trappes commandées.

De plus, il est possible de ne pas utiliser de boîtier de commande 18 entre les moyens de commande 17 et les actionneurs associés, les moyens de commande 17 commandant alors directement les actionneurs électromécaniques.

En outre, bien que l'on ait décrit un actionneur pour commander une vanne permettant l'alimentation d'un actionneur hydromécanique pour activer la trappe, il est possible de commander directement un actionneur électromécanique pour activer directement la trappe.

## Revendications

1. Dispositif de manoeuvre au sol d'une trappe (3) d'un atterrisseur (2) d'aéronef (1), le dispositif comportant des moyens de manoeuvre (5) de la trappe , des moyens d'accrochage (7) permettant de bloquer la trappe (3) lorsque celle-ci arrive en position fermée, au moins un actionneur (40) de déverrouillage agencé pour agir sur les moyens d'accrochage (7) en vue de les désactiver lors d'une ouverture de la trappe (3) en vol, et des moyens de commande (17) opérables par un opérateur au sol pour commander au moins :
- une séquence d'ouverture lors de laquelle l'actionneur électromécanique (40) de déverrouillage est actionné pour désactiver les moyens d'accrochage (7),
- une séquence de fermeture lors de laquelle les moyens de manoeuvre (5) sont actionnés pour refermer la trappe,
**caractérisé en ce que** l'actionneur de déverrouillage est un actionneur électromécanique, et **en ce que** les moyens de commande (17) comportent au moins deux organes de commande (24, 25, 26) agencés de sorte qu'ils doivent être tous deux actionnés successivement pour autoriser la commande de l'actionneur électromécanique (40) de déverrouillage ou la commande des moyens de manoeuvre (5).

2. Dispositif selon la revendication 1, dans lequel au moins l'un des organes de commande (24, 25, 26) est agencé pour commander un organe d'affichage d'état (28, 29) du dispositif.

3. Dispositif selon la revendication 2, dans lequel les moyens de commande comportent au moins trois organes de commande (24, 25, 26) dont l'organe de commande d'affichage d'état (24), un organe de commande d'ouverture (25) et un organe de commande de fermeture (26), agencés de sorte que :
- la séquence d'ouverture est activée par l'actionnement de l'organe de commande d'affichage d'état (24) et l'organe de commande d'ouverture (25),
- la séquence de fermeture est activée par l'actionnement de l'organe de commande d'affichage d'état (24) et l'organe de commande de fermeture (26).

4. Dispositif selon l'une des revendications 1 à 3, comportant au moins un indicateur (35) perceptible au sol pour indiquer un état du dispositif.

5. Dispositif selon la revendication 4, dans lequel l'indicateur (35) comporte des moyens de blocage (45) en position ouverte d'une porte (15) d'accès aux moyens de commande (17) du dispositif, agencés de sorte que :
- ces moyens sont activés à l'issue de la séquence d'ouverture,
- ces moyens sont désactivés postérieurement à la fin de la séquence de fermeture.

6. Dispositif selon l'une des revendications 1 à 5, dans lequel les moyens de commande (17) comportent un organe de commande de test (41) permettant de vérifier qu'un équipement annexe fonctionne correctement.

7. Dispositif selon la revendication 6, dans lequel l'équipement annexe à tester est un actionneur électromécanique de secours de boîtier d'accrochage d'atterrisseur.

## Patentansprüche

1. Vorrichtung zum Betätigen einer Klappe (3) eines Fahrwerks (2) eines Flugzeugs (1) am Boden, wobei die Vorrichtung Betätigungsmittel (5) zum Betätigen der Klappe und Befestigungsmittel (7) umfasst, die ein Verriegeln der Klappe (3) gestatten, wenn diese in der geschlossenen Position ankommt, mindestens einen Entriegelungsaktor (40), der so ausgebildet ist, dass er auf die Befestigungsmittel (7) einwirkt, um diese bei einer Öffnung der Klappe (3) während des Fluges zu deaktivieren, und Steuermittel (17), die von einer Bedienperson am Boden bedienbar sind, um mindestens zu steuern:
- eine Öffnungssequenz, während der der elektromechanische Entriegelungsaktor (40) betätigt wird, um die Befestigungsmittel (7) zu deaktivieren,
- eine Schließsequenz, während der die Betätigungsmittel (5) betätigt werden, um die Klappe wieder zu verschließen,
**dadurch gekennzeichnet, dass** der Entriegelungsaktor ein elektromechanischer Aktor ist und dass die Steuermittel (17) mindestens zwei Steuerelemente (24, 25, 26) umfassen, die so ausgebildet sind, dass sie alle beide nacheinander betätigt werden müssen, um die Steuerung des elektromechanischen Entriegelungsaktors (40) oder die Steuerung der Betätigungsmittel (5) zu gestatten.

2. Vorrichtung nach Anspruch 1, bei der mindestens eines der Steuerelemente (24, 25, 26) so ausgebildet ist, dass es ein Zustandsanzeigeelement (28, 29) der Vorrichtung steuert.

3. Vorrichtung nach Anspruch 2, wobei die Steuermittel mindestens drei Steuerelemente (24, 25, 26) umfassen, darunter ein Zustandsanzeigesteuerelement (24), ein Öffnungssteuerelement (25) und ein Schließsteuerelement (26), die so ausgebildet sind, dass:
- die Öffnungssequenz durch Betätigen des Zustandsanzeigesteuerelements (24) und des Öffnungssteuerelements (25) aktiviert wird,
- die Schließsequenz durch Betätigen des Zustandsanzeigesteuerelements (24) und des Schließsteuerelements (26) aktiviert wird.

4. Vorrichtung nach einem der Ansprüche 1 bis 3, umfassend mindestens einen Indikator (35), der am Boden wahrnehmbar ist, um einen Zustand der Vorrichtung anzuzeigen.

5. Vorrichtung nach Anspruch 4, bei der der Indikator (35) Blockiermittel (45) umfasst, um eine Tür (15) zum Zugriff auf die Steuermittel (17) der Vorrichtung in der offenen Position zu blockieren, wobei sie so ausgebildet sind, dass:
- diese Mittel am Ende der Öffnungssequenz aktiviert werden,
- diese Mittel nach dem Ende der Schließsequenz deaktiviert werden.

6. Vorrichtung nach einem der Ansprüche 1 bis 5, bei der die Steuermittel (17) ein Teststeuerelement (41) umfassen, mit dem überprüft werden kann, dass eine zusätzliche Ausrüstung korrekt arbeitet.

7. Vorrichtung nach Anspruch 6, bei der die zu testende zusätzliche Ausrüstung ein elektromechanischer Hilfsaktor des Fahrwerkverriegelungsgehäuses ist.

## Claims

1. Device for manoeuvring, on the ground, a door (3) of an aircraft (1) landing gear (2), the door (3) being linked with door manoeuvring means (5) and uplock means (7) for locking the door (3) when it reaches the closed position, at least one unlocking electromechanical actuator (40) arranged to act upon the uplock means (7) with a view to deactivating them during opening of the door (3) in flight, **characterised in that** the device comprises control means (17) which can be operated by an operator on the ground in order to control at least:
- an opening sequence during which the unlocking electromechanical actuator (40) is actuated in order to deactivate the uplock means (7),
- a closing sequence during which the manoeuvring means (5) are actuated in order to close the door again,
**characterized in that** the control means (17) comprise at least two control members (24, 25, 26) arranged such that they must both be actuated successively to enable control of the unlocking electromechanical actuator (40) or control of the manoeuvring means (5).

2. Device according to Claim 1, wherein at least one of the control members (24, 25, 26) is arranged to control a state display member (28, 29) of the device.

3. Device according to Claim 2, wherein the control means include at least three control members (24, 25, 26), including the state display control member (24), an opening control member (25) and a closing control member (26), which are arranged such that:
- the opening sequence is activated by the actuation of the state display control member (24) and the opening control member (25),
- the closing sequence is activated by the actuation of the state display control member (24) and the closing control member (26).

4. Device according to one of Claims 1 to 3, including at least one indicator (35) which can be seen on the ground in order to indicate a state of the device.

5. Device according to Claim 4, wherein the indicator (35) comprises means (45) for blocking in the open position a panel (15) for accessing the control means (17) of the device, which are arranged such that:
- these means are activated at the end of the opening sequence,
- these means are deactivated after the end of the closing sequence.

6. Device according to one of Claims 1 to 5, wherein the control means (17) comprise a test control member (41) for checking that additional equipment operates correctly.

7. Device according to Claim 6, wherein the additional equipment to be tested is a landing gear uplock box emergency electromechanical actuator.
